# EUROPÄISCHE PATENTSCHRIFT

(11) **EP 2 274 340 B1**
(45) Veröffentlichungstag und Bekanntmachung des Hinweises auf die Patenterteilung: **16.05.2012**
(21) Anmeldenummer: 09737782.4
(22) Anmeldetag: 31.03.2009
(51) Int. Cl.: C08F 8/32, C09D 7/02, C09D 17/00, C09B 67/00, C08F 222/08, C08F 212/08

(54) **PIGMENTDISPERGATOREN UND LEICHT DISPERGIERBARE FESTE PIGMENTZUBEREITUNGEN**
PIGMENT DISPERSER AND EASILY DISPERSED SOLID PIGMENT PREPARATIONS
AGENTS DISPERSEURS DE PIGMENTS ET PRÉPARATIONS PIGMENTAIRES SOLIDES FACILEMENT DISPERSIBLES

(30) Priorität: 30.04.2008 DE 102008021511
(43) Veröffentlichungstag der Anmeldung: 19.01.2011
(73) Patentinhaber: Clariant Finance (BVI) Limited, Road Town, Tortola (VG)
(72) Erfinder: PLÜG, Carsten, 64367 Mühltal/Niederbeerbach (DE); PITARCH LÓPEZ, Jesús, 60320 Frankfurt am Main (DE); WÖRNDLE, Alexander, 60313 Frankfurt am Main (DE)
(74) Vertreter: Hütter, Klaus
(86) Internationale Anmeldenummer: PCT/EP2009/002324
(87) Internationale Veröffentlichungsnummer: WO 2009/132738

(56) Entgegenhaltungen:
- EP-A- 0 303 281
- EP-A- 0 688 796
- EP-A- 1 046 685
- WO-A-2004/019858
- WO-A-2008/080580
- WO-A-2008/122606

## Beschreibung

Gegenstand der vorliegenden Erfindung sind Umsetzungsprodukte von Aminen mit Dicarbonsäureanhydridgruppen enthaltenden Polymeren, das Verfahren zu ihrer Herstellung und ihre Verwendung als Dispergieradditive für Pigmente. Die Erfindung betrifft außerdem feste Pigmentzubereitungen enthaltend diese Umsetzungsprodukte.

Bei der Herstellung von pigmentierten Überzugsmitteln ist eine feine und gleichmäßige Verteilung der Feststoffpartikel im Überzugsmittelsystem qualitätsentscheidend. Werden die Pigmentpartikel im Anwendungssystem nicht optimal dispergiert und stabilisiert, können Flockungserscheinungen und Sedimentbildung auftreten, die zu unerwünschten Viskositätsänderungen des Anwendungssystems, zu Farbtonänderungen und Verlusten an Farbstärke, Deckvermögen, Glanz, Homogenität, Brillanz sowie schlecht reproduzierbaren Farbtönen und zu höherer Ablaufneigung bei Lacken führen können.

Um die Feinverteilung und Stabilisierung von Pigmenten in Anstrichsystemen, Druckfarben und Lacken zu erleichtern und damit die optimalen anwendungstechnischen Eigenschaften zu erreichen, werden häufig Netz- und Dispergiermittel verwendet.

Aus DE 103 48 825 sind Copolymere auf Basis von styroloxidhaltigen Alkenylethern und ungesättigten Carbonsäure-Derivaten bekannt, die Einsatz in der Herstellung von wässrigen Pigmentpräparationen finden.

In EP 1 026 178 werden Aminoxidgruppen enthaltende Maleinsäureanhydrid-Copolymere als Dispergiermittel für Pigmente beschrieben, die in wässrigen Pigmentpasten verarbeitet werden.

Das Dispergieren von Pigmenten in einem Anwendungssystem ist ein kritischer und aufwändiger Prozess. In der Regel werden Pigmente in Kombination mit Dispergier- und Netzmitteln durch den Einsatz von energieintensiven Kugelmühlen, Rührwerkskugelmühlen oder Hochleistungsperlmühlen in einer Flüssigphase eingearbeitet. Im Vergleich lassen sich leicht dispergierbare feste Pigmentzubereitungen mit wesentlich geringerem Energieeintrag und schnellerer Farbentwicklung in das Anwendungssystem einarbeiten, was von großem wirtschaftlichem Vorteil ist.

Eine Verbesserung hinsichtlich der Verträglichkeit in Anwendungsmedien verschiedener Polarität bringen die in WO 2007/039603 beschriebenen festen Pigmentzubereitungen. Die für die Herstellung solcher Pigmentzubereitungen verwendeten Dispergieradditive bestehen aus einem durch Kettenreaktion synthetisierten polymeren Rückgrat, das Seitenketten auf Basis von hydrophilen Polyethern trägt. Als Beispiel für solche Dispergieraddtive wird das Umsetzungsprodukt von einem Styrol-Maleinsäureanhydrid Copolymer mit einem Polyetheramin erwähnt. Die beschriebenen Pigmentzubereitungen lassen sich sowohl in wässrigen als auch in lösemittelhaltigen Lacken leicht dispergieren, allerdings ist die Dispergierung in sehr hydrophoben Lacksystemen, wie z. B. lösemittelhaltigen Industrielacken auf der Basis von Langöl-Alkydharzen, nicht ausreichend.

EP 0 688 796 A1 offenbart Umsetzungsprodukte von Polyetheraminen mit Polymeren alpha,beta-ungesättigter Dicarbonsäuren, die als Fließverbesserer in Erdöldestillaten eingesetzt werden.

US 5,369,198 offenbart Polyalkylenglykolester-haltige Maleinsäure-Vinyl-Copolymere.

WO 97/47566 offenbart Maleinsäureimid-Copolymere für Zementschlämme.

US 6,406,143 B1 offenbart Amidgruppen-haltige Styrolmaleinat-Pfropfcopolymere für Inkjet-Tinten.

Es besteht Bedarf an Dispergieradditiven, die die Bereitstellung von universell leicht dispergierbaren festen Pigmentzubereitungen ermöglichen. Unter universell versteht man feste Pigmentzubereitungen, die sowohl in hydrophilen als auch in lipophilen Anwendungsmedien eine leichte Dispergierbarkeit aufweisen. Solche leicht dispergierbaren Pigmente sollen breit verträglich sein und ihre Einarbeitung soll unabhängig vom Anwendungsmedium genauso leicht und ohne zusätzliche Schritte erfolgen. Leicht dispergierbar bedeutet, dass sich das Pigment mit geringem Energieeintrag und schneller Farbentwicklung in das Anwendungssystem einarbeiten läßt. Sanfte Scherkräfte, wie z. B. die Wirkung eines Dissolvers (Sägezahnrührer), sind ausreichend, um die optimale Dispergierung des Pigments zu erreichen, so dass man auf weitergehende kostenintensive Dispergierschritte in dem Anwendungssystem (z. B. Perlmahlung) verzichten kann.

Überraschenderweise wurde gefunden, dass nachstehend definierte polymere Dispergieradditive, die durch Umsetzung von bestimmten Aminen mit Copolymeren alpha, beta-ungesättigter Dicarbonsäuren erhältlich sind, die Bereitstellung von festen Pigmentzubereitungen ermöglichen, die sich sowohl in hydrophilen als auch in lipophilen Anwendungsmedien leicht dispergieren lassen.

Gegenstand der vorliegenden Erfindung sind Copolymere bestehend aus den folgenden Struktureinheiten:
0 bis 20 Mol-%, vorzugsweise 0,5 bis 10 Mol-%, Struktureinheit A 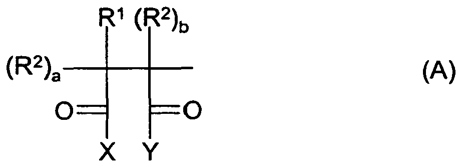
0 bis 20 Mol-%, vorzugsweise 0,5 bis 10 Mol-%, Struktureinheit B 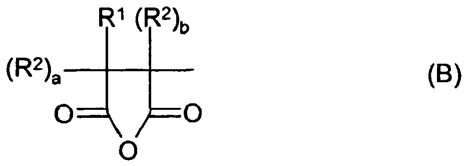
1 bis 79 Mol-%, vorzugsweise 2 bis 46 Mol-%, Struktureinheit C 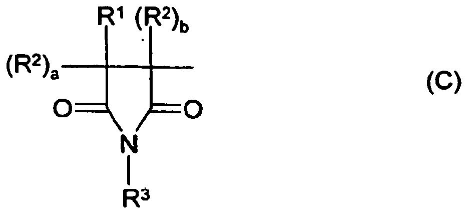
1 bis 79 Mol%, vorzugsweise 2 bis 46 Mol%, Struktureinheit D 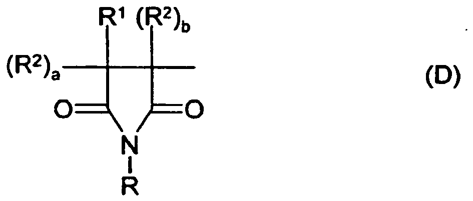 und
20 bis 80 Mol%, vorzugsweise 50 bis 75 Mol-%, Struktureinheit E 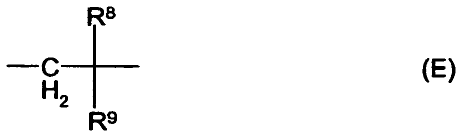 wobei
   - R¹ und R²: unabhängig voneinander Wasserstoff, Methyl oder Methylen,
   - a, b: gleich Null oder Eins und a + b gleich Eins,
   - R³: Oleyl, Stearyl oder N-Propylenimidazol ist;
   - X und Y: unabhängig voneinander-OH, -O-C₁-C₃₀-Alkyl, NR⁴R⁵, -O-N⁺H₂R⁴R⁵
   - R⁴ und R⁵: unabhängig voneinander Wasserstoff, R³ oder R sind;
   - R: 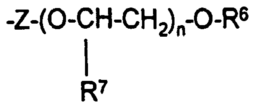 bedeutet,
   - Z: C₂-C₄-Alkylen
   - n: eine Zahl zwischen 1 und 1000,
   - R⁶: Wasserstoff, C₁-C₃₀-Alkyl, C₅-C₁₂-cycloalkyl oder C₆-C₃₀ Aryl,
   - R⁷: Wasserstoff, C₁-C₄-Alkyl,
   - R⁸: Wasserstoff oder C₁-C₄-Alkyl ist, und
   - R⁹: C₁C₆₀-Alkyl oder C₆-C₁₀-Aryl bedeuten.

Die vorgenannten Alkyl-, Alkenyl-, Cycloalkyl-, Aryl- und Heteroarylreste können substituiert sein. Geeignete Substituenten sind beispielsweise (C₁-C₆)-Alkyl, Halogene, wie Fluor, Chlor, Brom und Jod, bevorzugt Chlor, und (C₁-C₆)-Alkoxy.

Im Einzelnen leiten sich die Struktureinheiten A, B, C und D von alpha, betaungesättigten Dicarbonsäureanhydriden der allgemeinen Formel H und/oder G ab

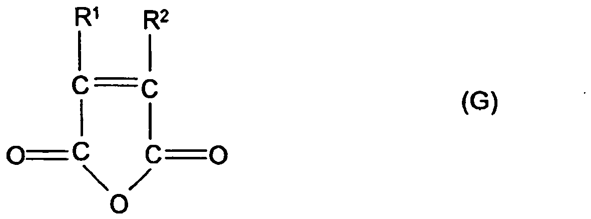

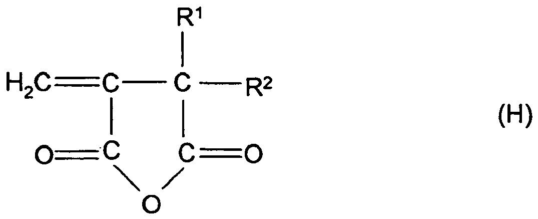

Beispiele sind Maleinsäureanhydrid, Itaconsäureanhydrid, Citraconsäureanhydrid, bevorzugt Maleinsäureanhydrid.

Die Struktureinheiten E leiten sich von den Olefinen der allgemeinen Formel (I) ab:

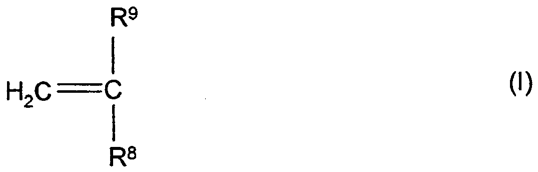

Beispielhaft seien die folgenden Olefine genannt: Styrol, alpha-Methylstyrol, Dimethylstyrol, alpha-Ethylstyrol, Diethylstyrol, i-Propylstyrol, tert.-Butylstyrol, Diisobutylen, und alpha-Olefine, wie Decen, Dodecen, Tetradecen, Pentadecen, Hexadecen, Octadecen, C₂₀-alpha-Olefin, C₂₄-alpha-Olefin, C₃₀-alpha-Olefin, Tripropenyl, Tetrapropenyl, Pentapropenyl sowie deren Mischungen. Bevorzugt sind alpha-Olefine mit 10 bis 24 C-Atomen und Styrol, besonders bevorzugt ist Styrol.

Die Herstellung der erfindungsgemäßen Dicarbonsäureanhydridgruppen enthaltenden Polymere geschieht vorzugsweise durch radikalische Copolymerisation der olefinisch ungesättigten Dicarbonsäureanhydride (G und/oder H) mit Vinylverbindungen (E).

Beispiele für geeignete handelsübliche Dicarbonsäureanhydridgruppen enthaltende Polymere, die bereits die Struktureinheiten G und/oder H sowie E enthalten, sind z. B. die als Sartomer^{®} SMA 2000 von der Fa. Sartomer bzw. Cray Valley vertriebenen Styrolmaleinsäureanhydridharze, oder alpha-Olefin-Maleinsäureanhydridcopolymere wie sie z. B. von der Fa. Philips-Chevron als PA^{®} 18 vertrieben werden oder durch Umsetzung von entsprechenden alpha-Olefinen mit Maleinsäureanhydrid erhalten werden.

Es können auch kommerziell erhältliche Polymere eingesetzt werden, die bereits Struktureinheiten A aufweisen, wie z. B. die als Scripset^{®} 550 von der Fa. Hercules vertriebenen Styrol-Maleinsäureanhydrid-Monobuwlmaleat-Monomethylmaleat Copolymere.

Bevorzugt werden Styrolmaleinsäureanhydridharze als Dicarbonsäureanhydridgruppen enthaltende Polymere für die Herstellung der erfindungsgemäßen Dispergieradditive verwendet, wobei das molare Verhältnis Maleinsäureanhydrid zu Styrol zwischen 1 zu 1 und 1 zu 3 liegt.

Der Rest NR in Struktureinheit D leitet sich von den Umsetzungsprodukten der Dicarbonsäureanhydridgruppen mit Polyetheraminen der allgemeinen Formel D1 ab 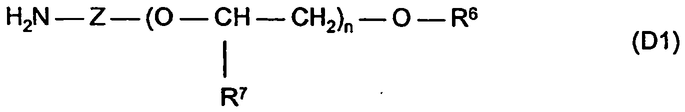 worin die Reste Z, R⁶, k⁷ und n die vorstehend genannten Bedeutungen haben. Solche Polyethermonoamine sind bekannt und z. B. bei der Fa. Huntsman unter den Bezeichnungen Jeffamine^{®} und Surfonamine^{®} kommerziell erhältlich.

Der Rest NR³ in Struktureinheit C in den nachstehend beschriebenen Pigmentzubereitungen leitet sich von den Umsetzungsprodukten der Dicarbonsäureanhydridgruppen mit primären Aminen ab. Geeignete Amine sind beispielsweise gesättigte und ungesättigte, aliphatische und cycloaliphatische Amine wie Methylamin, Ethylamin, n-Propylarnin, Isopropylamin, n-Butylamin, Hexylamin, Cyclohexylamin, 2-Ethylhexylamin, Octylamin, Decylamin, Dodecylamin, Tetradecylamin, Hexadecylamin, Octadecylamin, Octadecenylamin, Cocosfettamin, Dehydroabietylamin, Oleylamin, Stearylamin und Talgfettamin sowie aliphatische und cycloaliphatische Amine, die aromatische Reste tragen, wie Benzylamin, 1-Phenylethylamin, 2-Phenylethylamin und 3-Phenylpropylamin, insbesondere N-haltige heteroaromatische Reste wie beispielsweise 2-(Aminomethyl)-pyridin, 3-(Aminomethyl)-pyridin, 1-Aminoindan und N-(3-Aminopropyl)-imidazol, sowie aromatische Amine wie Anilin, Aminonaphthalin, Aminonaphthol, Aminofluoren, Aminoanthracen, Aminopyren und insbesondere heterocyclische Aminverbindungen, wie beispielsweise Aminopyridin, Aminocarbazol, Aminochinolin, Aminopyrimidin, Aminopurin, Adenin, Aminotriazol, Aminobenzimidazol, Aminobenzimidazolon, Aminothiazol, Aminobenzthiazol, Aminopyrazol, Aminopyrazolon und Aminothiadiazol.

Die Reste X und Y leiten sich von den Umsetzungsprodukten der Dicarbonsäureanhydridgruppen mit Wasser oder mit Alkoholen der Formel HO-(C₁C₃₀)-Alkyl und/oder Aminen der Formel HNR⁴R⁵ ab. Als primäre Amine kommen beispielsweise die vorstehend genannten in Betracht.

Als sekundäre Amine seien beispielsweise genannt: Didecylamin, Ditetradecylamin, Distearylamin, Dicocosfettamin, Ditalgfettamin und deren Mischungen.

Als Alkohole seien beispielsweise genannt: Methanol, Ethanol, Propanol, Isopropanol, n-, sek.-, tert.-Butanol, Octanol, Tetradecanol, Hexadecanol, Octadecanol, Talgfettalkohol, Behenylalkohol und deren Mischungen.

Für das Verfahren zur Herstellung der erfindungsgemäßen Dispergieradditive gibt es verschiedene Möglichkeiten der Ausführung. Vorzugsweise werden die oben beschriebenen Dicarbonsäureanhydridgruppen enthaltenden Polymere in einem Reaktionsschritt mit einer Mischung der aufgeführten Amino- und ggf. Hydroxyverbindungen zur Reaktion gebracht.

Dabei kann
a) die Mischung der Amino- und ggf. Hydroxyverbindungen vorgelegt und das dicarbonsäureanhydridgruppenhaltige Polymer zugegeben werden; oder vorzugsweise
b) das dicarbonsäureanhydridgruppenhaltige Polymer vorgelegt und die Mischung der Amino- und ggf. Hydroyxverbindungen zugegeben werden.

Die Menge an eingesetztem Amin liegt in einem molaren Verhältnis zwischen 0,01 und 1 zu Dicarbonsäureanhydrid, bevorzugt wird ein molares Verhältnis zwischen 0,1 und 0,99, besonders bevorzugt werden zwischen 0,5 und 0,95 Mol Amin pro MolDicarbonsäureanhydrid eingesetzt.

Das molare Verhältnis zwischen den Struktureinheiten C und D liegt zwischen 0,01 und 10, bevorzugt 0,1 bis 5, besonders bevorzugt 0,15 bis 3,5 Mole Struktureinheit C pro Mol Struktureinheit D.

Die Herstellung der erfindungsgemäßen Umsetzungsprodukte erfolgt in Substanz oder in organischen Lösemitteln, die gegenüber den Reaktionspartnern inert sind oder deren Reaktivität gegenüber den Reaktionspartnern zu vernachlässigen ist und in denen die Reaktanden sowie die Reaktionsprodukte zumindest teilweise löslich, bevorzugt aber vollständig löslich sind. Zu nennen sind beispielsweise Kohlenwasserstoffe, insbesondere aromatische Kohlenwasserstoffe wie Toluol, Xylole, Ethylbenzole, chlorierte Kohlenwasserstoffe wie 1,2-Dichlorethan, Trichlorethan und insbesondere Chlorbenzole, Ketone, vorzugsweise Propanon, Ethylmethylketon, iso-Butylmethylketon und Alkohole, vorzugsweise Butanol, Isobutanol, Pentanol und Hexanol, Ethylenglykolether und Propylenglykolether, beispielsweise Ethylenglykolmonomethyl-ether, Ethylenglykolmonoethylether, Diethylen-glykolmonomethylether, Diethylenglykolmonoethylether, Diethylenglykolmonobutylether, Ethylenglykol-dimethylether, Ethylenglykoldiethylether, Diethylenglykoldimethylether, Propylenglykolmonomethylether, Propylenglykolmonoethylether, Umsetzungsprodukte von Alkoholen mit Ethylenoxid wie z. B. Fettsäurealkoholethoxylate wie Octylalkohol-, Decylalkohol-, Dodecylalkohol-, Tetradecylalkohol-, Hexadecylalkohol-, Octadecylalkohol-, Octadecenylalkohol-, Cocosfettalkohol-, Oleylalkohol- und Stearylalkohol-ethoxylate, Ester wie beispielsweise N-Butylacetat, Methylglykolacetat und Ethylglykolacetat sowie Amide wie Dimethylformamid und N-Methyl-pyrrolidon-(2). Die Lösemittel können je nach Anwendungsgebiet entweder im Reaktionsgemisch verbleiben, wobei der Festkörperanteil der Lösung vorzugsweise bis zu 40 Gew.-%, insbesondere 15 bis 30 Gew.-% beträgt, oder sie werden destillativ entfernt.

Die Reaktion zur Herstellung der erfindungsgemäßen Dispergieradditive kann ggf. unter Zugabe eines Katalysators, wie beispielsweise tertiäre Amine, durchgeführt werden.

Die Bildung der in den Struktureinheiten A, C und D der erfindungsgemäßen Dispergieradditive dargestellten Amide und Imide erfolgt durch Reaktion des Dicarbonsäureanhydridgruppen enthaltenden Polymers mit vorstehend beschriebenen primären (für Struktureinheit C und D, ggf. A) bzw. sekundären (für Struktureinheit A) Aminen bei Temperaturen zwischen 100 und 200 °C, vorzugsweise 130 und 180°C. Vorzugsweise werden die Reaktanden anfangs bei erhöhter Temperatur von 40 °C bis 120 °C in Kontakt gebracht, später die Temperatur auf 140°C bis 180 °C, vorzugsweise 160°C bis 170 °C gesteigert. Die Präsenz der Struktureinheiten C und D in den erfindungsgemäßen Dispergieradditiven kann mittels IR-Spektroskopie eindeutig nachgewiesen werden, da Imide eine charakteristische Absorption bei 1700 cm⁻¹ im IR Spektrum zeigen.

Ein weiterer Gegenstand der vorliegenden Erfindung sind leicht dispergierbare feste Pigmentzubereitungen gemäß Anspruch 2.

Bevorzugte Pigmentzubereitungen enthalten
5 bis 99 Gew.%, insbesondere 40 bis 95 Gew.-%, mindestens eines Pigments,
1 bis 95 Gew.%, insbesondere 5 bis 60 Gew.%, eines Copolymers gemäß Ansprüchen 2 bis 5 und
0 bis 10 Gew.-%, vorzugsweise 0,01 bis 5 Gew.-%, eines Hilfsmittels aus der Gruppe der Füllstoffe, Flammschutzmittel, Konservierungsmittel, Lichtschutzmittel, pigmentären und nichtpigmentären Dispergatoren, Tenside, Antioxidationsmittel, Entschäumer, Harze und Antistatika, jeweils bezogen auf das Gesamtgewicht der Pigmentzubereitung.

Als Pigmente werden organische Pigmente bevorzugt. Unter diesen kommen Monoazo-, Disazo-, verlackte Azo-, β-Naphthol-, Naphthol AS-, Benzimidazolon-, Disazokondensations-, Azo-Metallkomplex-Pigmente und polycyclische Pigmente wie z. B. Phthalocyanin-, Chinacridon-, Perylen-, Perinon-, Thioindigo-, Anthanthron-, Anthrachinon-, Flavanthron-, Indanthron-, lsoviolanthron-, Pyranthron-, Dioxazin-, Chinophthalon-, Isoindolinon-, Isoindolin- und Diketopyrrolopyrrol-Pigmente oder ein saurer bis alkalischer Ruß aus der Gruppe der Furnaceruße und Gasruße in Betracht.

Von den genannten organischen Pigmenten sind diejenigen besonders geeignet, die für die Herstellung der Zubereitungen möglichst feinteilig sind, wobei bevorzugt 95 % und besonders bevorzugt 99 % der Pigmentpartikel eine Teilchengröße ≤ 500 nm besitzen.

Als beispielhafte Auswahl besonders bevorzugter organischer Pigmente sind dabei Rußpigmente, wie z. B. Gas- oder Furnaceruße; Monoazo- und Disazopigmente, insbesondere die Colour Index Pigmente Pigment Yellow 1, Pigment Yellow 3, Pigment Yellow 12, Pigment Yellow 13, Pigment Yellow 14, Pigment Yellow 16, Pigment Yellow 17, Pigment Yellow 73, Pigment Yellow 74, Pigment Yellow 81, Pigment Yellow 83, Pigment Yellow 87, Pigment Yellow 97, Pigment Yellow 111, Pigment Yellow 126, Pigment Yellow 127, Pigment Yellow 128, Pigment Yellow 155, Pigment Yellow 174, Pigment Yellow 176, Pigment Yellow 191, Pigment Yellow 213, Pigment Yellow 214, Pigment Red 38, Pigment Red 144, Pigment Red 214, Pigment Red 242, Pigment Red 262, Pigment Red 266, Pigment Red 269, Pigment Red 274, Pigment Orange 13, Pigment Orange 34 oder Pigment Brown 41; β-Naphthol- und Naphthol AS-Pigmente, insbesondere die Colour Index Pigmente Pigment Red 2, Pigment Red 3, Pigment Red 4, Pigment Red 5, Pigment Red 9, Pigment Red 12, Pigment Red 14, Pigment Red 53:1, Pigment Red 112, Pigment Red 146, Pigment Red 147, Pigment Red 170, Pigment Red 184, Pigment Red 187, Pigment Red 188, Pigment Red 210, Pigment Red 247, Pigment Red 253, Pigment Red 256, Pigment Orange 5, Pigment Orange 38 oder Pigment Brown 1; verlackte Azo- und Metallkomplexpigmente, insbesondere die Colour Index Pigmente Pigment Red 48:2, Pigment Red 48:3, Pigment Red 48:4, Pigment Red 57:1, Pigment Red 257, Pigment Orange 68 oder Pigment Orange 70; Benzimidazolinpigmente, insbesondere die Colour Index Pigmente Pigment Yellow 120, Pigment Yellow 151, Pigment Yellow 154, Pigment Yellow 175, Pigment Yellow 180, Pigment Yellow 181, Pigment Yellow 194, Pigment Red 175, Pigment Red 176, Pigment Red 185, Pigment Red 208, Pigment Violet 32, Pigment Orange 36, Pigment Orange 62, Pigment Orange 72 oder Pigment Brown 25; Isoindolinon- und Isoindolinpigmente, insbesondere die Colour Index Pigmente Pigment Yellow 139 oder Pigment Yellow 173; Phthalocyaninpigmente, insbesondere die Colour Index Pigmente Pigment Blue 15, Pigment Blue 15:1, Pigment Blue 15:2, Pigment Blue 15:3, Pigment Blue 15:4, Pigment Blue 15:6, Pigment Blue 16, Pigment Green 7 oder Pigment Green 36; Anthanthron-, Anthrachinon-, Chinacridon-, Dioxazin-, Indanthron-, Perylen-, Perinon- und Thioindigopigmente, insbesondere die Colour Index Pigmente Pigment Yellow 196, Pigment Red 122, Pigment Red 149, Pigment Red 168, Pigment Red 177, Pigment Red 179, Pigment Red 181, Pigment Red 207, Pigment Red 209, Pigment Red 263, Pigment Blue 60, Pigment Violet 19, Pigment Violet 23 oder Pigment Orange 43; Triarylcarboniumpigmente, insbesondere die Colour Index Pigmente Pigment Red 169, Pigment Blue 56 oder Pigment Blue 61; Diketopyrrolopyrrolpigmente, insbesondere die Colour Index Pigmente Pigment Red 254, Pigment Red 255, Pigment Red 264, Pigment Red 270, Pigment Red 272, Pigment Orange 71, Pigment Orange 73, Pigment Orange 81 zu nennen.

Die erfindungsgemäßen Pigmentzubereitungen können übliche Hilfsmittel aus der Gruppe Füllstoffe, Flammschutzmittel, Konservierungsmittel, Lichtschutzmittel, pigmentären und nicht pigmentären Dispergatoren, Tenside, Antioxidationsmittel, Harze, Entschäumer und Antistatika enthalten, vorzugsweise in den üblichen Mengen von 0,1 bis 20 Gew.-%, bezogen auf das Gesamtgewicht der Pigmentzubereitung.

Beispiele üblicher Tenside, die in den erfindungsgemäßen Pigmentzubereitungen enthalten sein können, sind:

Alkylsulfate wie z. B. Laurylsulfat, Stearylsulfat oder Octadecylsulfat, primäre Alkylsulfonate wie z. B. Dodecylsulfonat, und sekundäre Alkylsulfonate, insbesondere das C₁₃-C₁₇-Alkansulfonat-Natriumsalz, Alkylphosphate, Alkylbenzolsulfonate wie beispielsweise die Dodecylbenzolsulfonsäure, ebenso Salze dieser Verbindungen. Ferner eignen sich Sojalecithin sowie Kondensationsprodukte aus Fettsäure und Taurin oder Hydroxyethansulfonsäure, ebenso Alkoxylierungsprodukte von Alkylphenolen, Rizinusölkolophoniumestem, Fettalkoholen, Fettaminen, Fettsäuren und Fettsäureamiden, diese Alkoxylierungsprodukte können desgleichen mit ionischen Endgruppen ausgestattet sein, beispielsweise als Sulfobernsteinsäure-Halbester oder auch als Sulfonsäure-, Schwefelsäure- und Phosporsäureester, sowie deren Salze, den Sulfonaten, Sulfaten oder Phosphaten. Auch sind oxalkylierte Additionsverbindungen, die durch Umsetzung von Polyepoxiden mit Aminen oder Bisphenol-A bzw. Bisphenol-A-Derivaten mit Aminen erhalten werden, sowie Harnstoffderivate geeignet.

Gegenstand der vorliegenden Erfindung ist auch ein Verfahren zur Herstellung der erfindungsgemäßen Pigmentzubereitungen, dadurch gekennzeichnet, dass man ein Pigment in Form von Pulver, Granulat oder Presskuchen in Gegenwart von Wasser oder einem organischen Lösungsmittel oder einem Gemisch aus Wasser und organischem Lösungsmittel mit dem erfindungsgemäßen Copolymer und gegebenenfalls besagten Hilfsmitteln vermischt.

Eine besonders vorteilhafte Vermischung kann durch den Einsatz eines Mahl-oder Dispergieraggregats erreicht werden. Dazu können Rührwerke, Dissolver (Sägezahnrührer), Rotor-Stator-Mühlen, Kugelmühlen, Rührwerkskugelmühlen wie Sand- und Perlmühlen, Schnellmischer, Knetapparaturen, Walzenstühle oder Hochleistungsperlmühlen verwendet werden. Die Feindispergierung bzw. Mahlung der Pigmente erfolgt dabei bis zur gewünschten Teilchengrößenverteilung und kann bei Temperaturen im Bereich von 0 bis 100°C erfolgen, zweckmäßig bei einer Temperatur zwischen 10 und 70°C, vorzugsweise bei 20 bis 60 °C. Abhängig vom Typ des Pigments kann die erhaltene Pigmentsuspension einem Finish unterworfen werden. Der Finish wird zweckmäßigerweise in dem vorliegenden organischem Lösemittel, Wasser oder Wasser-Lösemittel-Gemisch bei einer Temperatur von 50 bis 250 °C, besonders 70 bis 200 °C, insbesondere 100 bis 190°C, und zweckmäßigerweise für eine Zeit von 5 Minuten bis 24 Stunden, besonders 5 Minuten bis 18 Stunden, insbesondere 5 Minuten bis 6 Stunden, durchgeführt. Bevorzugt wird der Finish bei Siedetemperatur, insbesondere bei Temperaturen oberhalb des Siedepunktes des Lösemittelsystems unter Druck durchgeführt. Falls eine reine wässrige Pigmentdispersion bevorzugt wird, kann das ggf. eingesetzte Lösemittel mit Hilfe einer Wasserdampfdestillation entfernt werden.

Die nach dem erfindungsgemäßen Verfahren hergestellten Pigmentzubereitungen können bei Bedarf in fester Form isoliert werden, beispielsweise durch Filtration, Dekantation, Zentrifugation, Sprühtrocknung, Wirbelschichttrocknung, Bandtrocknung, Sprühgranulierung oder Trocknung im Schaufeltrockner. Die Isolierung der erfindungsgemäßen Pigmentzubereitungen erfolgt vorzugsweise durch Filtration und abschließende Trocknung. Falls die erhaltene Pigmentzubereitung grobkörnig anfällt, wird sie zweckmäßigerweise noch einer Trockenmahlung unterzogen.

Die erfindungsgemäßen Pigmentzubereitungen eignen sich zum Pigmentieren und Färben von natürlichen und synthetischen Materialien aller Art, insbesondere von Anstrichmitteln, Beschichtungssystemen, wie Tapetenfarben, Druckfarben, Dispersions- und Lackfarben, die wasser- und/oder lösemittelhaltig sind.

Ferner eignen sich die erfindungsgemäßen Pigmentzubereitungen zur Einfärbung makromolekularer Materialien aller Art, z. B. von natürlichen und synthetischen Fasermaterialien, bevorzugt Cellulosefasern, auch zur Papiermassefärbung wie zur Laminateinfärbung. Weitere Anwendungen sind die Herstellung von Druckfarben, hierbei beispielsweise Textildruck-, Flexodruck-, Dekordruck- oder Tiefdruckfarben, Tapetenfarben, wasserverdünnbaren Lacken, Holzschutzsystemen, Viskose-Spinnfärbungen, Lacken, Wurstdärmen, Saatgut, Düngemittel, Glas, insbesondere Glasflaschen, sowie zur Massefärbung von Dachziegeln, als Farbmittel in elektrophotographischen Tonern und Entwicklern, zur Einfärbung für Putze, Beton, Holzbeizen, Buntstiftminen, Faserschreiber, Wachse, Paraffine, Tuschen, Pasten für Kugelschreiber, Kreiden, Wasch- und Reinigungsmittel, Schuhpflegemittel, Latex-Produkten, Schleifmitteln sowie zum Einfärben von Kunststoffen bzw. hochmolekularen Materialien aller Art. Hochmolekulare organische Materialien sind beispielsweise Celluloseether und - ester, wie Ethylcellulose, Nitrocellulose, Celluloseacetat oder Cellulosebutyrat, natürliche Harze oder Kunstharze, wie Polymerisationsharze oder Kondensationsharze, z. B. Aminoplaste, insbesondere Harnstoff- und Melaminformaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Latices, Silikon, Silikonharze, einzeln oder in Mischung.

Weiterhin eignen sich die erfindungsgemäßen Pigmentzubereitungen zur Herstellung von Inkjet-Tinten, wie z. B. auf wässriger oder nichtwässriger Basis ("Solvent Based"), Mikroemulsionstinten, UV-härtbare Tinten sowie in solchen Tinten, die nach dem Hot-Melt-Verfahren funktionieren, für den Einsatz in allen konventionellen Ink-Jet-Druckern, insbesondere für solche, die auf dem Bubble-Jet- oder Piezo-Verfahren beruhen. Mit diesen Tinten kann Papier bedruckt werden, sowie natürliche oder synthetische Fasermaterialien, Folien und Kunststoffe.

Zudem können die erfindungsgemäßen Pigmentzubereitungen zum Bedrucken verschiedenster Arten von beschichteten oder unbeschichteten Substratmaterialien verwendet werden, so z. B. zum Bedrucken von Pappe, Karton, Holz und Holzwerkstoffen, metallischen Materialien, Halbleitermaterialien, keramischen Materialien, Gläsern, Glas- und Keramikfasern, anorganischen Werkstoffen, Beton, Leder, Lebensmitteln, Kosmetika, Haut und Haaren. Das Substratmaterial kann dabei zweidimensional eben oder räumlich ausgedehnt, d.h. dreidimensional gestaltet sein und sowohl vollständig oder nur teilweise bedruckt oder beschichtet werden.

Außerdem sind die erfindungsgemäßen Pigmentzubereitungen auch geeignet als Farbmittel für Farbfilter ("Colour Filter") für "Flat Panel Displays", sowohl für die additive wie für die subtraktive Farberzeugung, ferner für "Photo-Resists", sowie als Farbmittel für elektronische Tinten ("Electronic Inks" bzw. "e-inks") oder elektronisches Papier ("Electronic Paper" bzw. "e-paper").

Gegenstand der Erfindung ist auch ein Verfahren zum Färben eines hochmolekularen organischen Materials, das ein gleichförmiges Dispergieren einer wirksam pigmentierenden Menge einer erfindungsgemäßen Pigmentzubereitung in dem organischen Material durch Einrühren der Pigmentzubereitung in eine Suspension oder Lösung des organischen Materials umfasst. Unter Einrühren wird jegliche Art von Mischen unter Einsatz geringer Scherkräfte verstanden, also z. B. auch Schütteln. Eine wirksam pigmentierende Menge liegt meist zwischen 0,01 und 40 Gew.-% Pigmentzubereitung, bezogen auf das Gewicht des zu pigmentierenden organischen Materials.

### Beispiele:

Allgemeine Vorschrift zur Herstellung der erfindungsgemäßen Dispergieradditive:

Ein Dicarbonsäureanhydridgruppen enthaltendes Polymer (31 mmol Anhydrid) wird bei 25 °C mit einem Polyetheramin der Formel D1 (18 mmol primäres Amin, zur Erzeugung der Struktureinheit D) und einem Amin der Formel H₂N-R³ (10 mmol primäres Amin, zur Erzeugung der Struktureinheit C) gemischt. Die Reaktionsmischung wird dann 3 Stunden bei 175 °C unter Vakuum gerührt. Anschließend wird die Mischung auf Raumtemperatur abgekühlt. Man erhält eine gelb-bräunliche, mittelviskose Flüssigkeit.

| Beispiel | Dicarbonsäure-anhydrid Polymer | D1 | H₂NR³ | IR (cm-1) | Säurezahl (mg KOH/g) |
|---|---|---|---|---|---|
| 1 | Sartomer^{®} SMA200 | Surfonamin^{®} L-207 | Oleylamin | 1779, 1700 | 12,4 |
| 2 | Sartomer^{®} SMA200 | Surfonamin^{®} L-207 | Benzylamin | 1779, 1700 | 14,4 |
| 3 | Sartomer^{®} SMA200 | Surfonamin^{®} L-207 | Dodecylamin | 1779, 1700 | 16 |
| 4 | Sartomer^{®} SMA200 | Surfonamin^{®} L-207 | Octylamin | 1779, 1700 | 14,5 |
| 5 | Sartomer^{®} SMA200 | Surfonamin^{®} L-207 | N-(3-Aminopropyl)-imidazol | 1779, 1700 | 5,3 |
| 6 Referenz-beispiel | Sartomer^{®} SMA200 | Surfonamin^{®} L-207 | - | 1779, 1700 | 28 |

Allgemeine Vorschrift zur Herstellung der erfindungsgemäßen Pigmentzubereitungen:

50 g Hostaperm^{®} Rosa E (C.I. No. 73915) werden in einem Gemisch aus 400 g Wasser und 250 g Isobutanol homogen suspendiert. Anschließend werden 11 g eines Dispergiermittels aus einem der Beispiele 1 bis 6 zugegeben, und die Mischung wird mit Hilfe eines T25 Ultra-Turrax^{®} 15 min bei 6500 Upm dispergiert. Anschließend wird das Isobutanol abdestilliert und das belegte Pigment abfiltriert, mit Wasser gewaschen und bei 80 °C im Trockenschrank getrocknet. Nach einer Trockenmahlung (M20 Universalmühle, IKA) erhält man 56 g pulverförmige Pigmentzubereitung.

Zur Beurteilung der leichten Dispergierbarkeit in Lacksystemen verschiedener Polarität werden die Pigmentzubereitungen aus den Beispielen 1 bis 6 durch Dissolver-Dispergierung in einem Lackbenzin-haltigen luftrocknenden Langöl-Alkydharz-Einbrennlack (LA-Lack) und in einer wässrigen Dispersionsfarbe für Außenanstriche (W-Dispersionsfarbe) getestet.

Allgemeine Vorschrift zur Pigmentierung eines lösemittelhaltigen LA-Lacks:

In einem mit einer 4 cm Zahnscheibe versehenen Dissolver wurden 14,4 g der leicht dispergierbaren Pigmentzubereitung in 45,6 g des Langöl-Alkydharz Anreibelacks 30 min bei 40 °C und 10000 Upm dispergiert. 15 g dieses pigmentierten Anreibelacks wurden unter langsamem Rühren mit einem Glasstab bei Raumtemperatur mit 15 g eines Auflackgemisches und 60 g eines Klarlackgemisches versetzt.

Zur Herstellung der Aufhellung wurden 6,75 g des obigen Volltonlacks mit 20 g Langöl-Alkydharz Weißlack (27 % TiO₂) durch einfaches manuelles Einrühren homogenisiert. Die so hergestellten Farben wurden mit einem Filmziehrahmen 200 µm auf Prüfkarten aufgezogen und zunächst 15 min bei Raumtemperatur und anschließend 60 min bei 60°C im Trockenschrank getrocknet.

Allgemeine Vorschrift zur Pigmentierung einer wässrigen Dispersionsfarbe:

In einem mit einer 4 cm Zahnscheibe versehenen Dissolver wurden 36,0 g der leicht dispergierbaren Pigmentzubereitung in 42,0 g eines Anreibegemisches 30 min bei 20 °C und 8000 Upm dispergiert. Zur Herstellung der Aufhellung wurden 2 g des pigmentierten Anreibegemisches mit 100 g wässriger Weißdispersion (20 % TiO₂) durch einfaches manuelles Einrühren homogenisiert. Die so hergestellten Farben wurden mit einem Filmziehrahmen 200 µm auf Prüfkarten aufgezogen und 60 min bei Raumtemperatur getrocknet.

Die nachfolgenden Zahlenwerte für Farbstärke und Reinheit sind relativ zum Referenzbeispiel.

| | LA-Lack | | W-Dispersionsfarbe | |
|---|---|---|---|---|
| Dispergieradditiv | Farbstärke | dC | Farbstärke | |
| Beispiel 1 | 118 % | 0,76 | 100 % | |
| Beispiel 2 | 101 % | 0,10 | 100 % | |
| Beispiel 3 | 116 % | 0,80 | 101 % | |
| Beispiel 4 | 108 % | 0,13 | 107 % | |
| Beispiel 5 | 119 % | 0,49 | 100 % | |
| Beispiel 6 - Referenz | 100 % | | 100 % | |

| | | | | |
|---|---|---|---|---|
| dC >0 bedeutet einen reineren Farbeindruck. Die dC-Werte bei den W-Dispersionsfarben liegen innerhalb der Spezifikation des Referenzbeispiels (absoluter dC-Wert < 0.40) | | | | |

Durch die Einführung der Struktureinheit C im Pigmentdispergator verbessert sich die Dispergierbarkeit der Pigmentzubereitungen in hydrophoben lösemittelhaltigen Langöl Alkydharzen, ohne dass die gute Dispergierbarkeit in wässrigen Dispersionsfarben beeinträchtigt wird. Somit zeigen die erfindungsgemäßen Pigmentzubereitungen eine echte universelle Einsetzbarkeit.

## Patentansprüche

1. Copolymer, bestehend aus den folgenden Struktureinheiten:
0 bis 20 Mol-% Struktureinheit A 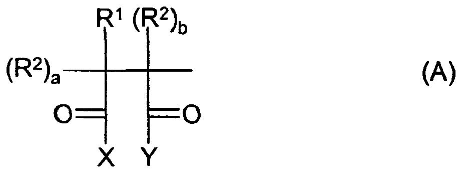
0 bis 20 Mol-% Struktureinheit B 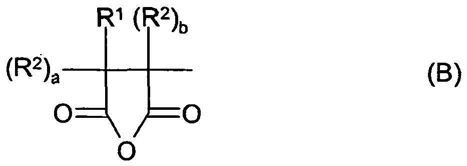
1 bis 79 Mol% Struktureinheit C 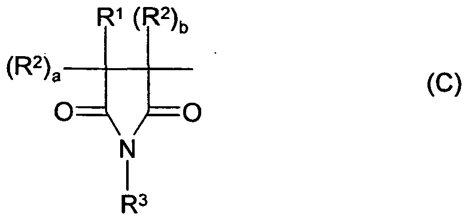
1 bis 79 Mol% Struktureinheit D 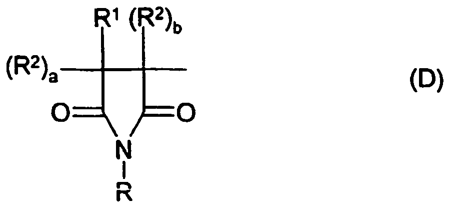 und
20 bis 80 Mol-% Struktureinheit E 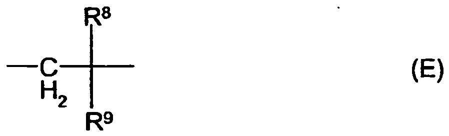 wobei
R¹ und R² unabhängig voneinander Wasserstoff, Methyl oder Methylen,
a, b gleich Null oder Eins und a + b gleich Eins;
R³ Oleyl, Stearyl oder N-Propylenimidazol ist;
X und Y unabhängig voneinander -OH, -O-C₁-C₃₀-Alkyl, NR⁴R⁵; -C⁻N⁺H₂R⁴R⁵;
R⁴ und R⁵ unabhängig voneinander Wasserstoff, R³ oder R,
R die Bedeutung von 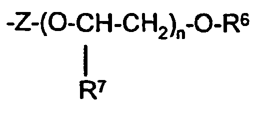 hat,
Z C₂-C₄-Alkylen;
n eine Zahl zwischen 1 und 1000;
R⁶ Wasserstoff, C₁-C₃₀-Alkyl, C₅-C₁₂-Cycloalkyl oder C₆-C₃₀-Aryl;
R⁷ Wasserstoff, C₁-C₄-Alkyl;
R⁸ Wasserstoff oder C₁-C₄-Alkyl ist und
R⁹ C₁-C₆₀-Alkyl oder C₆-C₁₀-Aryl bedeutet, enthalten.

2. Feste Pigmentzubereitung, enthaltend
(a) 5 bis 99 Gew.-% mindestens eines Pigments,
(b) 1 bis 95 Gew.-% eines Copolymers
bestehend aus den folgenden Struktureinheiten: 0 bis 20 Mol% Struktureinheit A 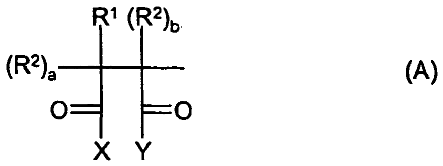 0 bis 20 Mol-% Struktureinheit B 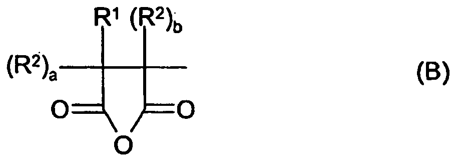 1 bis 79 Mol-% Struktureinheit C 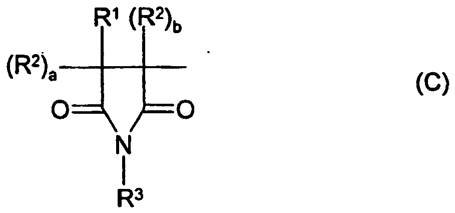 1 bis 79 Mol-% Struktureinheit D 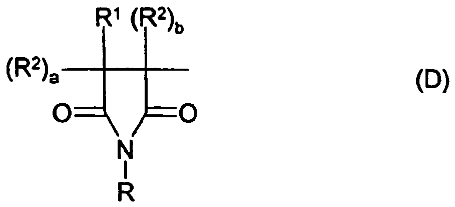 und
20 bis 80 Mol-% Struktureinheit E 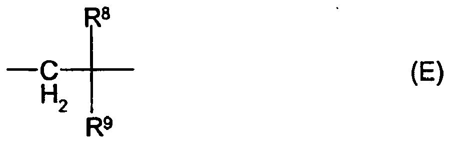 wobei
R¹ und R² unabhängig voneinander Wasserstoff, Methyl oder Methylen,
a, b gleich Null oder Eins und a + b gleich Eins;
R³ C₁-C₄₀-Alkyl, C₅-C₃₀-Cycloalkyl, C₆-C₃₀-Aryl, C₁-C₄-Alkylen-C₆-C₃₀-aryl, C₃-C₃₀ Heteroaryl, C₁-C₄-Alkylen-C₃₋₃₀-Heteroaryl oder C₂-C₄₀-Alkenyl;
X und Y unabhängig voneinander -OH, -O-C₁-C₃₀-Alkyl, NR⁴R⁵; -O-N⁺H₂R⁴R⁵;
R⁴ und R⁵ unabhängig voneinander Wasserstoff, R³ oder R,
R die Bedeutung von 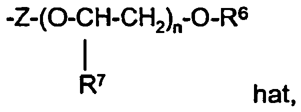
Z C₂-C₄-Alkylen;
n eine Zahl zwischen 1 und 1000;
R⁶ Wasserstoff, C₁-C₃₀-Alkyl, C₅-C₁₂-Cycloalkyl oder C₆-C₃₀-Aryl;
R⁷ Wasserstoff, C₁-C₄-Alkyl;
R⁸ Wasserstoff oder C₁-C₄-Alkyl ist und
R⁹ C₁-C₆₀-Alkyl oder C₆-C₁₀-Aryl bedeutet, enthalten;
(c) 0 bis 10 Gew.-% eines Hilfsmittels aus der Gruppe der Füllstoffe, Flammschutzmittel, Konservierungsmittel, Lichtschutzmittel, pigmentären und nichtpigmentären Dispergatoren, Tenside, Antioxidationsmittel, Entschäumer, Harze und Antistatika, jeweils bezogen auf das Gesamtgewicht der Pigmentzubereitung.

3. Pigmentzubereitung nach Anspruch 2, **dadurch gekennzeichnet, dass** das copolymer ein Styrolmaleinsäureanhydridharz ist, wobei das molare Verhältnis Maleinsäureanhydrid zu Styrol zwischen 1 zu 1 und 1 zu 3 liegt.

4. Pigmentzubereitung nach Anspruch 2 oder 3, **dadurch gekennzeichnet, dass** R³ C₈-C₃₀-Alkyl, C₈-C₃₀-Alkenyl, Benzyl oder N-Propylenimidazol bedeutet.

5. Pigmentzubereitung nach einem oder mehreren der Ansprüche 2 bis 4, **dadurch gekennzeichnet, dass** R³ Oleyl, Stearyl oder N-Propylenimidazol ist.

6. Pigmentzubereitung nach mindestens einem der Ansprüche 2 bis 5, **dadurch gekennzeichnet, dass** das Pigment aus der Klasse der Monoazo-, Disazo-, verlackten Azo-, β-Naphthol-, Naphthol AS-, Benzimidazolon-, Disazokondensations-, Azo-Metallkomplex-Pigmente, Phthalocyanin-, Chinacridon-, Perylen-, Perinon-, Thioindigo-, Anthanthron-, Anthrachinon-, Flavanthron-, Indanthron-, Isoviolanthron-, Pyranthron-, Dioxazin-, Chinophthalon-, Isoindolinon-, Isoindolin- und Diketopyrrolopyrrol-Pigmente oder der sauren bis alkalischen Ruße aus der Gruppe der Fumaceruße und Gasruße ist.

7. Verfahren zur Herstellung einer Pigmentzubereitung nach Ansprüche mindestens einem der 2 bis 6, **dadurch gekennzeichnet, dass** man das Pigment in Form von Pulver, Granulat oder Presskuchen in Gegenwart von Wasser oder einem organischen Lösungsmittel oder einem Gemisch aus Wasser und organischen Lösungsmittel mit dem Copolymer vermischt.

8. Verfahren nach Anspruch 7, **dadurch gekennzeichnet, dass** man die Pigmentzubereitung durch Filtration und abschließende Trocknung in fester Form isoliert.

9. Verwendung einer Pigmentzubereitung nach mindestens einem der Ansprüche 2 bis 6 zum Pigmentieren natürlicher oder synthetischer Materialien.

10. Verwendung nach Anspruch 9 zum Pigmentieren von wässrigen Anstrichmitteln, Dispersions- und Lackfarben, wasserverdünnbaren Lacken, Tapetenfarben und Druckfarben.

11. Verwendung nach Anspruch 9 zum Pigmentieren von lösemittelhaltigen Anstrichmitteln, Dispersions- und Lackfarben, Tapetenfarben und Druckfarben.

12. Verwendung nach Anspruch 11 zum Pigmentieren von lösemittelhaltigen Farben auf der Basis von Alkydharzlacken.

13. Verwendung nach Anspruch 9 zum Pigmentieren und Färben von natürlichen und synthetischen Fasermaterialien, zur Papiermassefärbung und Laminateinfärbung sowie zur Herstellung von, Ink-Jet-Tinten, elektrophotographischen Tonern, Pulverlacken, Farbfiltern, elektronischen Tinten und "Electronic Paper", Holzschutzsystemen, Viskose-Spinnfärbung, Wurstdärmen, Saatgut, Düngemitteln, Glasflaschen, sowie zur Massefärbung von Dachziegeln, zur Einfärbung für Putze, Beton, Holzbeizen, Buntstiftminen, Faserschreibern, Wachsen, Paraffinen, Tuschen, Pasten für Kugelschreiber, Kreiden, Wasch- und Reinigungsmitteln, Schuhpflegemitteln, Latex-Produkten, Schleifmitteln sowie zum Einfärben von Kunststoffen.

14. Verfahren zum Färben eines hochmolekularen organischen Materials, das ein gleichförmiges Dispergieren einer wirksam pigmentierenden Menge einer Pigmentzubereitung nach mindestens einem der Ansprüche 2 bis 6 in dem organischen Material durch Einrühren der Pigmentzubereitung in eine Suspension oder Lösung des organischen Materials umfasst.

## Claims

1. A copolymer consisting of the following structural units:
0 to 20 mol% of structural unit A 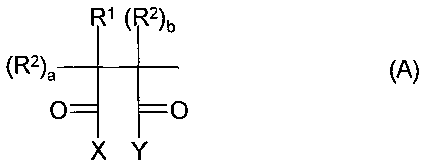
0 to 20 mol% of structural unit B 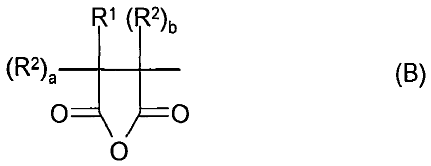
1 to 79 mol% of structural unit C 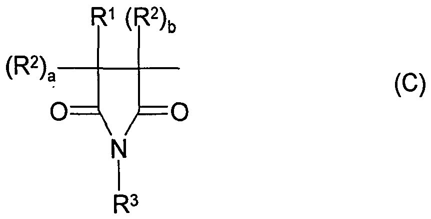 1 to 79 mol% of structural unit D 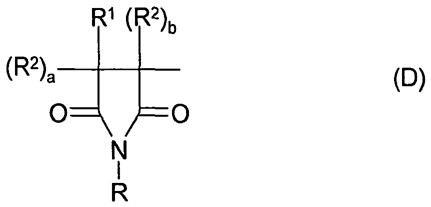 and
20 to 80 mol% of structural unit E 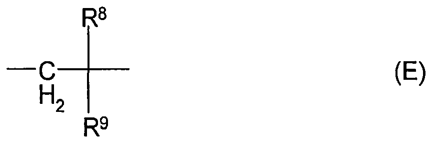 where
R¹ and R² are each independently hydrogen, methyl or methylene,
a, b are each zero or one and a + b is one,
R³ is oleyl, stearyl or N-propyleneimidazole;
X and Y are each independently -OH, -O-C₁-C₃₀-alkyl, NR⁴R⁵, -O-N⁺H₂R⁴R⁵,
R⁴ and R⁵ are each independently hydrogen, R³ or R,
R is 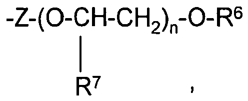
Z is C₂-C₄-alkylene,
n is a number between 1 and 1000,
R⁶ is hydrogen, C₁-C₃₀-alkyl, C₅-C₁₂-cycloalkyl or C₆-C₃₀-aryl,
R⁷ is hydrogen, C₁-C₄-alkyl,
R⁸ is hydrogen or C₁-C₄-alkyl, and
R⁹ is C₁-C₆₀-alkyl or C₆-C₁₀-aryl.

2. A solid pigment preparation comprising:
(a) 5% to 99% by weight of at least one pigment,
(b) 1% to 95% by weight of a copolymer,
consisting of the following structural units:
0 to 20 mol% of structural unit A 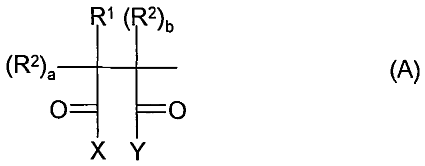
0 to 20 mol% of structural unit B 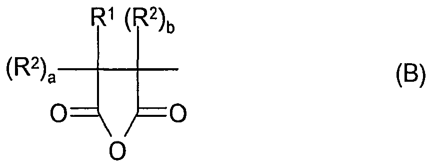
1 to 79 mol% of structural unit C 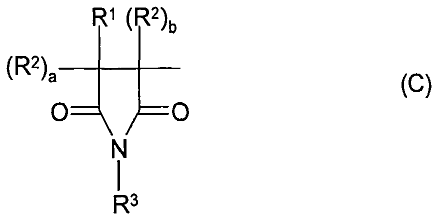
1 to 79 mol% of structural unit D 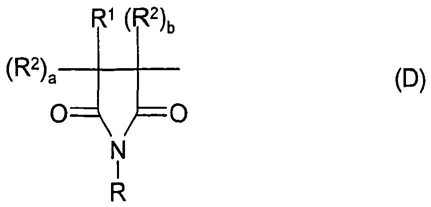 and
20 to 80 mol% of structural unit E 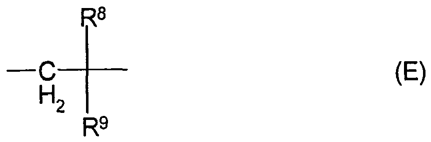 where
R¹ and R² are each independently hydrogen, methyl or methylene,
a, b are each zero or one and a + b is one,
R³ is C₁-C₄₀-alkyl, C₅-C₃₀-cycloalkyl, C₆-C₃₀-aryl, C₁-C₄-alkylene-C₆-C₃₀-aryl, C₃-C₃₀-hetaryl, C₁-C₄-alkylene-C₃-C₃₀-hetaryl or C₂-C₄₀-alkenyl,
X and Y are each independently-OH, -O-C₁-C₃₀-alkyl, NR⁴R⁵, -O-N⁺H₂R⁴R⁵,
R⁴ and R⁵ are each independently hydrogen, R³ or R,
R is 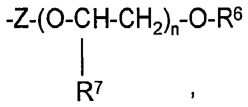
Z is C₂-C₄-alkylene,
n is a number between 1 and 1000,
R⁶ is hydrogen, C₁-C₃₀-alkyl, C₅-C₁₂-cycloalkyl or C₆-C₃₀-aryl,
R⁷ is hydrogen, C₁-C₄-alkyl,
R⁸ is hydrogen or C₁-C₄-alkyl, and
R⁹ is C₁-C₆₀-alkyl or C₆-C₁₀-aryl;
(c) 0 to 10% by weight of an auxiliary from the group consisting of fillers, flame retardants, preservatives, photoprotectants, pigmentary and nonpigmentary dispersants, surfactants, antioxidants, defoamers, resins and antistats, each based on the total weight of the pigment preparation.

3. The pigment preparation as claimed in claim 2, **characterized in that** the copolymer is a styrene-maleic anhydride resin wherein the molar ratio of maleic anhydride to styrene is between 1:1 and 1:3.

4. The pigment preparation as claimed in claim 2 or 3, **characterized in that** R³ is C₈-C₃₀-alkyl, C₈-C₃₀-alkenyl, benzyl or N-propyleneimidazole.

5. The pigment preparation as claimed in one or more of claims 2 to 4, **characterized in that** R³ is oleyl, stearyl or N-propylene imidazole.

6. The pigment preparation as claimed in at least one of claims 2 to 5, **characterized in that** the pigment is from the class of the monoazo, disazo, lacked azo, β-naphthol, Naphthol AS, benzimidazolone, disazo condensation, azo metal complex pigments, phthalocyanine, quinacridone, perylene, perinone, thioindigo, anthanthrone, anthraquinone, flavanthrone, indanthrone, isoviolanthrone, pyranthrone, dioxazine, quinophthalone, isoindolinone, isoindoline and diketopyrrolopyrrole pigments or the acidic to alkaline carbon blacks from the group consisting of furnace blacks and gas blacks.

7. A process for producing a pigment preparation as claimed in at least one of claims 2 to 6, **characterized in that** the pigment in the form of powder, granulate or presscake is mixed with the copolymer in the presence of water or an organic solvent or a mixture of water and organic solvent.

8. The process as claimed in claim 7, **characterized in that** the pigment preparation is isolated in solid form by filtration and final drying.

9. The use of a pigment preparation as claimed in at least one of claims 2 to 6 for pigmenting natural or synthetic materials.

10. The use as claimed in claim 9 for pigmenting aqueous paints, emulsion and varnish colors, water-thinnable varnishes, wallpaper colors and printing inks.

11. The use as claimed in claim 9 for pigmenting solvent-containing paints, emulsion and varnish colors, wallpaper colors and printing inks.

12. The use as claimed in claim 11 for pigmenting solvent-containing colors based on alkyd resin varnishes.

13. The use as claimed in claim 9 for pigmenting and dyeing natural and synthetic fiber materials, for paper pulp dyeing and laminate coloration and also in the manufacture of inkjet inks, electrophotographic toners, powder coatings, color filters, electronic inks and "electronic paper", wood preservation systems, viscose dope dyeing, sausage casings, seed, fertilizers, glass bottles, and also for mass coloration of roof shingles, for coloring renders, concrete, wood stains, colored pencil leads, felt tip pens, waxes, paraffins, graphics inks, ballpoint pen pastes, chalks, washing and cleaning compositions, shoe care agents, latex products, abrasives and also for coloring plastics.

14. A process for coloring a high molecular weight organic material, which comprises uniformly dispersing an effectively pigmenting amount of a pigment preparation as claimed in at least one of claims 2 to 6 in the organic material by stirring the pigment preparation into a suspension or solution of the organic material.

## Revendications

1. Copolymère, constitué par les unités structurales suivantes :
0 à 20 % en moles de l'unité structurale A 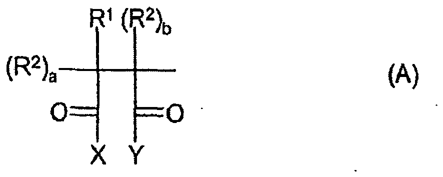
0 à 20 % en moles de l'unité structurale B 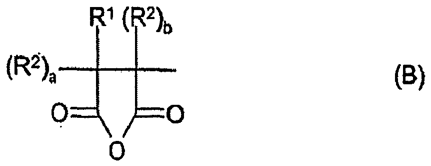
1 à 79 % en moles de l'unité structurale C 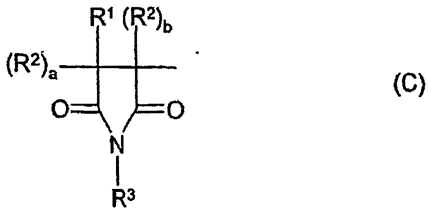
1 à 79 % en moles de l'unité structurale D 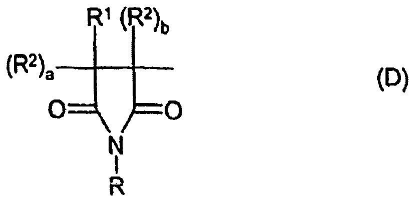
et 20 à 80 % en moles de l'unité structurale E 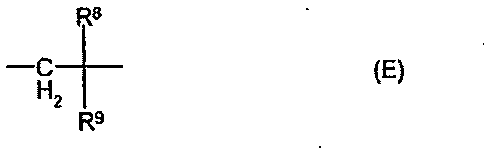
R¹ et R² représentant indépendamment l'un de l'autre hydrogène, méthyle ou méthylène ;
a, b représentant zéro ou un et a + b valant un ;
R³ représentant oléyle, stéaryle ou N-propylèneimidazole ;
X et Y C₃₀, NR⁴R⁵, représentant indépendamment l'un de l'autre -OH, -O-alkyle en C₁--O-N+H₂R⁴R⁵;
R⁴ et R⁵ représentant indépendamment l'un de l'autre hydrogène, R³ ou
R; R signifiant 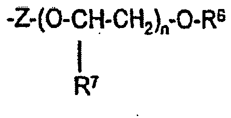
Z représentant alkylène en C₂-C₄ ;
n représentant un nombre compris entre 1 et 1 000 ;
R⁶ représentant hydrogène, alkyle en C₁-C₃₀, cycloalkyle en Cl-cl ou aryle en C₆-C₃₀ ;
R⁷ représentant hydrogène, alkyle en C₁-C₄ ;
R⁸ représentant hydrogène ou alkyle en C₁-C₄ et
R⁹ représentant alkyle en C₁-C₆₀ ou aryle en C₆-C₁₀.

2. Préparation pigmentaire solide, contenant :
(a) 5 à 99 % en poids d'au moins un pigment,
(b) 1 à 95 % en poids d'un copolymère constitué par les unités structurales suivantes :
0 à 20 % en moles de l'unité structurale A 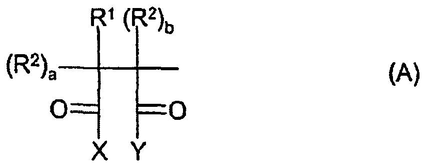
0 à 20 % en moles de l'unité structurale B 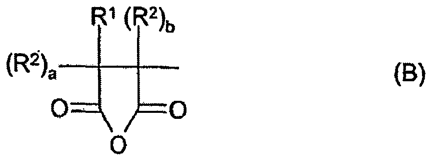
1 à 79 % en moles de l'unité structurale C 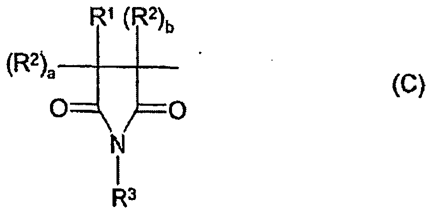
1 à 79 % en moles de l'unité structurale D 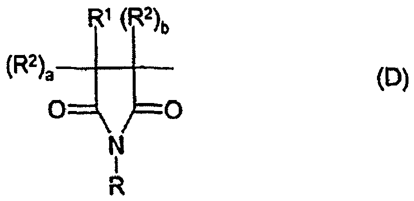 et 20 à 80 % en moles de l'unité structurale E 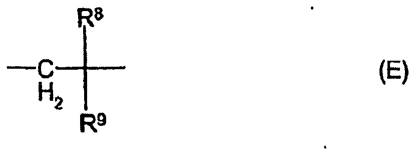
R¹ et R² représentant indépendamment l'un de l'autre hydrogène, méthyle ou méthylène ;
a, b représentant zéro ou un et a + b valant un ;
R³ représentant alkyle en C₁-C₄₀, cycloalkyle en C₅-C₃₀, aryle en
C₆-C₃₀, alkylène en C₁-C₄-aryle en C₆-C₃₀, hétéroaryle en C₃-C₃₀, alkylène
en C₁-C₄-hétéroaryle en C₃-C₃₀ ou alcényle en C₂-C₄₀ ;
X et Y représentant indépendamment l'un de l'autre -OH, -O-alkyle en C₁-C₃₀, NR⁴R⁵⁻-O⁺NH₂R⁴R⁵ ;
R⁴ et R⁵ représentant indépendamment l'un de l'autre hydrogène, R³ ou
R; R signifiant 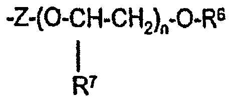
Z représentant alkylène en C₂-C₄ ;
n représentant un nombre compris entre 1 et 1 000 ;
R⁶ représentant hydrogène, alkyle en C₁-C₃₀, cycloalkyle en C₅-C₁₂ ou aryle en C₆-C₃₀;
R⁷ représentant hydrogène, alkyle en C₁-C₄ ;
R⁸ représentant hydrogène ou alkyle en C₁-C₄ et
R⁹ représentant alkyle en C₁-C₆₀ ou aryle en C₆-C₁₀;
(c) 0 à 10 % en poids d'un adjuvant du groupe constitué par les charges, les agents ignifuges, les conservateurs, les photoprotecteurs, les dispersants pigmentaires et non pigmentaires, les tensioactifs, les antioxydants, les agents antimousses, les résines et les antistatiques, à chaque fois par rapport au poids total de la préparation pigmentaire.

3. Préparation pigmentaire selon la revendication 2, **caractérisée en ce que** le copolymère est une résine styrène-anhydride de l'acide maléique, le rapport molaire entre l'anhydride de l'acide maléique et le styrène étant compris entre 1 sur 1 et 1 sur 3.

4. Préparation pigmentaire selon la revendication 2 ou 3, **caractérisée en ce que** R³ signifie alkyle en C₈-C₃₀, alcényle en C₈-C₃₀, benzyle ou N-propylèneimidazole.

5. Préparation pigmentaire selon une ou plusieurs des revendications 2 à 4, **caractérisée en ce que** R³ représente oléyle, stéaryle ou N-propylèneimidazole.

6. Préparation pigmentaire selon au moins l'une quelconque des revendications 2 à 5, **caractérisée en ce que** le pigment est de la classe des pigments monoazoïques, disazoïques, azoïques laqués, β-naphtol, naphtol AS, benzimidazolone, disazoïques de condensation, azoïques à complexe métallique, des pigments phtalocyanine, quinacridone, pérylène, périnone, thioindigo, anthanthrone, anthraquinone, flavanthrone, indanthrone, isoviolanthrone, pyranthrone, dioxazine, quinophtalone, isoindolinone, isoindoline et dicétopyrrolopyrrole ou des noirs de carbone acides à alcalins du groupe des noirs de fourneau et des noirs au tunnel.

7. Procédé de fabrication d'une préparation pigmentaire selon au moins l'une quelconque des revendications 2 à 6, **caractérisé en ce que** le pigment est mélangé avec le copolymère sous la forme d'une poudre, d'un granulat ou d'un gâteau de filtration en présence d'eau ou d'un solvant organique ou d'un mélange d'eau et d'un solvant organique.

8. Procédé selon la revendication 7, **caractérisé en ce que** la préparation pigmentaire est isolée sous forme solide par filtration et séchage ultérieur.

9. Utilisation d'une préparation pigmentaire selon au moins l'une quelconque des revendications 2 à 6 pour la pigmentation de matériaux naturels ou synthétiques.

10. Utilisation selon la revendication 9, pour la pigmentation de matériaux de revêtement aqueux, de peintures en émulsion et de vernis, de laques diluables à l'eau, de peintures pour papiers peints et d'encres d'impression.

11. Utilisation selon la revendication 9, pour la pigmentation de matériaux de revêtement contenant un solvant, de peintures en émulsion et de vernis, de peintures pour papiers peints et d'encres d'impression.

12. Utilisation selon la revendication 11, pour la pigmentation de peintures contenant un solvant à base de laques de résine alkyde.

13. Utilisation selon la revendication 9, pour la pigmentation et la coloration de matériaux fibreux naturels et synthétiques, pour la coloration de pâtes à papier et pour la coloration de stratifiés, ainsi que pour la fabrication d'encres jet d'encre, de toners électrophotographiques, de laques en poudre, de filtres colorés, de colorants électroniques et de papier électronique, de systèmes de protection du bois, de teinture en bain de filage de viscose, de boyaux de saucisses, de graines, d'engrais, de bouteilles en verre, ainsi que pour la coloration en masse de tuiles, pour la coloration d'enduits, de béton, de mordants pour bois, de mines de crayons de couleur, de marqueurs, de cires, de paraffines, d'encres de Chine, de pâtes pour stylo à bille, de craies, de produits de lavage et de nettoyage, de produits d'entretien pour chaussures, de produits en latex, de produits abrasifs, ainsi que pour la coloration de plastiques.

14. Procédé de coloration d'un matériau organique de poids moléculaire élevé, qui comprend une dispersion uniforme d'une quantité efficace pour la pigmentation d'une préparation pigmentaire selon au moins l'une quelconque des revendications 2 à 6 dans le matériau organique par mélange de la préparation pigmentaire dans une suspension ou solution du matériau organique.
